# EUROPEAN PATENT APPLICATION

(11) **EP 4 765 921 A1**
(43) Date of publication of application: **24.06.2026**
(21) Application number: 23949302.6
(22) Date of filing: 18.08.2023
(51) Int. Cl.: H04W 24/00

(54) **MODEL TESTING METHOD AND APPARATUSES**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Grassi, Stefano
(86) International application number: PCT/CN2023/113749
(87) International publication number: WO 2025/039108

(57) **Abstract**

Provided are a model testing method and apparatuses. The method comprises: a target device determines an auxiliary test model used for testing a first model, wherein the auxiliary test model is determined on the basis of a first condition, and the first condition is associated with one or more of the following: a training mode of the first model, an acquisition mode of the first model, a training mode of a peer model of the first model, an acquisition mode of the peer model of the first model, whether the first model is obtainable, whether the peer model of the first model is obtainable, whether the first model has been successfully deployed, whether the peer model of the first model has been successfully deployed, whether a reference model has been successfully deployed, whether a peer model of the reference model has been successfully deployed, and whether a test device supports the peer model of the first model. The target device can select the auxiliary test model on the basis of the first condition, so as to subsequently test the first model on the basis of the auxiliary test model, thus helping to enhance the probability of obtaining auxiliary test models.

## Description

### TECHNICAL FIELD

The present application relates to the field of communication technologies, and more particularly, to a method and apparatus for model testing.

### BACKGROUND

At present, in order to ensure normal use of a model (also referred to as a first model) in a communication system, it is necessary to test the model. If a test for the first model passes, communication may be performed based on the first model. If the test for the first model fails, communication may be performed based on a conventional method. In some scenarios, a test device needs to test the first model based on an auxiliary test model associated with the first model. At present, in test methods for testing the first model, methods for acquiring the auxiliary test model are just roughly defined. This way of roughly defining the methods for acquiring the auxiliary test model may limit the accuracy of the test methods.

### SUMMARY

The present application provides a method and apparatus for model testing. Various aspects of the present application are described below.

In a first aspect, there is provided a method for model testing, which includes that a target device determines an auxiliary test model for testing a first model, herein the auxiliary test model is determined based on a first condition, the first condition is associated with one or more of: a training manner for the first model; an acquisition manner of the first model; a training manner for a peer model of the first model; an acquisition manner of the peer model of the first model; whether the first model is available; whether the peer model of the first model is available; whether the first model is successfully deployed; whether the peer model of the first model is successfully deployed; whether a reference model is successfully deployed; whether a peer model of the reference model is successfully deployed; or whether a test device supports the peer model of the first model.

In a second aspect, there is provided an apparatus for model testing, which includes: a processing unit, configured to determine an auxiliary test model for testing a first model, herein the auxiliary test model is determined based on a first condition, the first condition is associated with one or more of: a training manner for the first model; an acquisition manner of the first model; a training manner for a peer model of the first model; an acquisition manner of the peer model of the first model; whether the first model is available; whether the peer model of the first model is available; whether the first model is successfully deployed; whether the peer model of the first model is successfully deployed; whether a reference model is successfully deployed; whether a peer model of the reference model is successfully deployed; or whether a test device supports the peer model of the first model.

In a third aspect, an apparatus for model testing is provided, which includes a processor, a memory and a communication interface. The memory is used for storing one or more computer programs. The processer is configured to call the computer programs in the memory, to cause a terminal device to perform some or all of the operations in the method of the first aspect.

In a fourth aspect, an embodiment of the present application provides a communication system which includes the above-described apparatus for model testing. In another possible design, the system may also include other devices that interact with the apparatus for model testing in the scheme provided by the embodiments of the present application.

In a fifth aspect, an embodiment of the present application provides a computer-readable storage medium storing a computer program that causes a communication device (e.g., an apparatus for model testing) to perform some or all of the operations in the methods of the above aspects.

In a sixth aspect, an embodiment of the present application provides a computer program product, herein the computer program product includes a non-transitory computer-readable storage medium storing a computer program operable to perform some or all of the operations of the methods of the above aspects using an apparatus for model testing. In some implementations, the computer program product may be a software installation package.

In a seventh aspect, an embodiment of the present application provides a chip including a memory and a processor. The processor can call and run a computer program from the memory to implement some or all of the operations described in the methods of the above aspects.

In the embodiments of the present application, a target device may select an auxiliary test model based on a first condition so that the first model is subsequently tested based on the auxiliary test model, which is helpful to improve the possibility of obtaining the auxiliary test model compared with the traditional auxiliary test model acquisition manner, thereby improving the accuracy of testing the first model by the test method.

### BRIEF DESCRIPTION OF THE DRAWINGS

FIG. 1 shows a wireless communication system 100 to which embodiments of the present application are applied.
FIG. 2 is a schematic diagram of a two-sided solution in a channel state information (CSI) feedback process.
FIG. 3 is a schematic flowchart of a method for model testing according to an embodiment of the present application.
FIG. 4 is a schematic diagram of a manner of acquiring a model in a communication scenario between a terminal device and a network device.
FIG. 5 is a schematic flowchart of a method for model testing according to another embodiment of the present application.
FIG. 6 is a schematic flowchart of a method for model testing according to another embodiment of the present application.
FIG. 7 is a schematic diagram of an apparatus for model testing according to an embodiment of the present application.
FIG. 8 is a schematic structural diagram of an apparatus according to an embodiment of the present application.

### DETAILED DESCRIPTION

Hereinafter, technical solutions in the present application will be described with reference to the accompanying drawings.

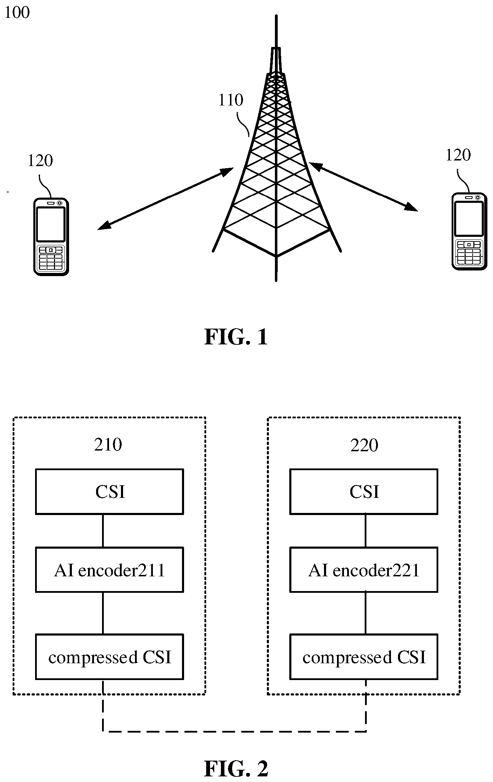

FIG. 1 shows a wireless communication system 100 to which embodiments of the present application are applied. The wireless communication system 100 may include a network device 110 and a terminal device 120. The network device 110 may be a device in communication with the terminal device 120. The network device 110 may provide communication coverage for a particular geographic area and may communicate with the terminal device 120 located within the coverage area.

FIG. 1 exemplarily illustrates one network device and two terminals. Alternatively, the wireless communication system 100 may include a plurality of network devices and another number of terminal devices may be included within the coverage range of each network device, and the embodiments of the present application are not limited thereto.

Optionally, the wireless communication system 100 may further include other network entities such as a network controller and a mobility management entity, and the embodiments of the present application are not limited thereto.

It should be understood that the technical solutions of the embodiments of the present application may be applied to various communication systems, such as, a 5th generation (5G) system or a new radio (NR) system, a long term evolution (LTE) system, an LTE frequency division duplex (FDD) system, an LTE time division duplex (TDD), and the like. The technical solution provided in the present application can also be applied to future communication systems, such as a sixth generation mobile communication system, a satellite communication system, and the like.

The terminal device in the embodiment of the present application may also be referred to as user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device. The terminal device in the embodiments of the present application may be a device that provides voice and/or data connectivity to a user, and may be used to connect people, objects, and machines, for example, a handheld device having a wireless connection function, a vehicle-mounted device, or the like. The terminal device in the embodiments of the present application may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in V2X or D2D, etc. For example, cellular telephones and automobiles communicate with each other using sidelink signals. The cellular telephone communicates with smart home devices without relaying communication signals through base stations.

The network device in the embodiments of the present application may be a device for communicating with a terminal device, and the network device may also be referred to as an access network device or a radio access network device. For example, the network device may be a base station. The network device in the embodiments of the present application may refer to a radio access network (RAN) node (or device) that connects the terminal device to the wireless network. The base station may generally cover, or be replaced by, various names such as, for example, a NodeB, an evolved NodeB, an eNB, a next generation NodeB (gNB), a relay station, an access point, a transmitting and receiving point (TRP), a transmitting point (TP), a master station MeNB, a secondary station SeNB, an MSR node, a home base station, a network controller, an access node, a wireless node, an access point, a transmitting node, a receiving or transmitting node, a base band unit (BBU), a remote radio unit (RRU), an active antenna unit, a remote radio head (RRH), a central unit, a distributed unit, a location node, and the like. The base station may be a macro base station, a micro base station, a relay node, a donor node, or the like, or a combination thereof. The base station may also refer to a communication module, modem, or chip for disposing within the aforementioned devices or apparatuses. The base station may also be a mobile switching center, a device that functions as a base station in a device-to-device D2D communication, a vehicle-to-everything (V2X) communication, a machine-to-machine (M2M) communication, a network-side device in a 6G network, a device that functions as a base station in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present application may refer to a CU or a DU, or the network device includes a CU and a DU. The gNB may also include an AAU.

Network devices and terminal devices may be deployed on land, including indoor or outdoor, handheld or vehicle-mounted; or they may also be deployed on the water; or they may also be deployed on aircraft, balloons and satellites in the air. In the embodiments of the present application, the scenario in which the network device and the terminal device are located is not limited.

It should be understood that all or part of the functions of the communication device in the present application may also be implemented by software function running on hardware, or by virtualization function instantiated on a platform, such as a cloud platform.

### Model-Based Wireless Communication Solution

With the development of artificial intelligence technology and/or machine learning technology, artificial intelligence (AI) models and/or machine learning (ML) models are introduced into communication systems, forming model-based wireless communication solutions. At present, model-based wireless communication solutions can be divided into two categories, one is single-sided solution and the other is two-sided solution. For the single-sided solution, the model-based solution is typically provided in only one device. For example, the model-based solution may be provided in only a terminal device. As another example, the model-based solution may be provided in only a network device. For the two-sided solution, it is usually necessary for the terminal device and the network device to cooperate with each other. That is, a model is provided in each of the terminal device and the network device. A two-sided solution in the CSI feedback process is described below with reference to Figure 2.

Referring to FIG. 2, an AI model-based encoder (also referred to as "AI encoder 211 or CSI compression model") may be introduced in a CSI compression process at a transmitter 210. Accordingly, an AI model-based decoder (also referred to as "AI decoder 221 or CSI recovery model") is introduced in a CSI recovery process at a receiver 220. That is, a model-based solution is provided in each of the transmitter 210 and the receiver 220, and therefore, this solution may also be referred to as a "two-side-model solution". In the transmitter 210, CSI to be transmitted may be compressed and encoded by the AI encoder 211 to obtain compressed CSI. Then, the compressed CSI is fed back to the receiver 220 through a feedback link. Accordingly, the receiver 220 may decode the compressed CSI through the AI decoder 221 to obtain recovered CSI.

In some scenarios, in order to improve the accuracy of CSI recovery, the CSI compression model and the CSI recovery model are usually mutually matched models. For example, the CSI compression model and the CSI recovery model may be obtained by joint training. If the CSI compression model and the CSI recovery model do not match each other, the accuracy of the CSI recovery process may decrease.

It should be noted that the above description takes the CSI feedback process as an example to introduce the model-based two-sided solution. In some implementations, the model-based two-sided solution can also be applied to signal modulation or demodulation processes, source (or channel) encoding or decoding processes, matching communication processes such as between a transmitter and a receiver. That is, in the two-sided solution, both a transmitting side and a receiving side of the communication system have models. Accordingly, the model of the transmitting side and the model of the receiving side can jointly complete one or some wireless transmission functions.

### Way to Build Model-Based Two-Sided Solution

In actual communication systems, if a model-based two-sided solution is to be built, it is usually necessary to consider a node for training a model and a node for deploying the model, especially a problem occurred when the training node is different from the usage node. At present, training manners and acquisition manners for models used in a two-sided solution (also called "two-side models") can be divided into three categories. Hereinafter, the acquisition manners are introduced by taking following three training manners as an example: single side training, joint training and sequential training.

For the single side training, both two-side models can be trained at one side device, and after the training, the model that a peer model needs to deploy (also known as "peer model") is transmitted to the peer model.

For example, the terminal device trains the two-side models, and after the training is completed, the terminal device may transmit the peer model to the network device for deployment. For another example, the network device trains the two-sided models, and after the training is completed, the network device transmits the peer model to the terminal device for deployment.

For the joint training, the two-side models may be separately deployed at two different devices, and accordingly, the two-side models are jointly trained by the two devices.

For example, one of the two-side models may be deployed in the terminal device, and the other of the two-side models may be deployed in the network device. Accordingly, the network device and the terminal device may jointly train the two-side models in the joint training process. That is, the terminal device and the network device may jointly complete the forward-transmission and back-transmission of information required for model training, and jointly complete the joint training for the two-side models according to information interaction between the network device and the terminal device.

For the sequential training, the two-side models may be separately deployed at two different devices. Accordingly, the model may be trained at one device first, and after the training is completed, the device may transmit data necessary for training the model of the other device to the other device, and then the other device may train the model based on the received data.

For example, the two-side models may be deployed in the network device and the terminal device, respectively. The network device may train one of the two-side models. After the training is completed, the network device transmits a training data set to the terminal device. Accordingly, the terminal device may train the model of the terminal device based on the training data set, and then the two-side models trained based on the training data set may be used respectively by the network device and the terminal device in a matching manner.

For another example, the two-side models may be deployed in the network device and the terminal device, respectively. The terminal device may train one of the two-side models. After the training is completed, the terminal device transmits a training data set to the network device. Accordingly, the network device may train the model of the network device based on the training data set, and then the two-side models trained based on the training data set may be used respectively by the network device and the terminal device in a matching manner.

### Test method for two-side models

At present, in order to ensure the normal use of the two-side models in communication system, it is necessary to test the two-sided models. If the test for the two-side models passes, communication can be performed based on the two-sided models. If the test for the two-side models fails, communication can be performed based on a conventional method. The above test method for the two-side models is different from the testing for traditional specific equipment, functions and schemes. For the test method for the two-side models, it is necessary to consider the matching and use of models between devices that need to deploy the two-side models.

It is assumed that the two-side models are respectively deployed in the terminal device and the network device, that is, the terminal device is deployed with a first model of the two-sided models, and the network device is deployed with a peer model of the two-sided models. If the first model deployed in the terminal device is tested, it needs to be tested based on the peer model deployed in the network device. If the test device cannot obtain the peer model to assist in participating in the test for the first model, the uncertainty of the test quality will increase. That is, if the test result for the first model is poor in this case, it may be caused by improper selection of a model (also referred to as an "auxiliary test model") selected by the test device to assist in participating in the test for the first model, but it is not caused by problems of the first model itself (e.g., design problems of the first model, implementation problems of the first model, or use problems of the first model). Therefore, according to the different acquisition manners of the peer-to-peer model, the test methods for the two-side models can be divided into three categories. It is assumed that the model to be tested is deployed in device 1 and the peer model is deployed in device 2.

In a first type of test method, the device 1 provides a peer model to ensure the accuracy of the test.

For example, the model to be tested is deployed in the terminal device, and at this time, the terminal device may provide the peer model to the test device. For another example, the model to be tested is deployed in the network device, and at this time, the network device may provide the peer model to the test device.

In a second type of test method, the device 2 provides the peer model to ensure the accuracy of the test.

For example, the model to be tested is deployed in the terminal device, and at this time, the network device may provide the peer model to the test device. For another example, the model to be tested is deployed in the network device, and at this time, the terminal device may provide the peer model to the test device.

In a third type of test method, a common model is defined in the protocol to assist the testing for the first model to ensure the accuracy of the test.

For example, the model to be tested is deployed in the terminal device, and at this time, the test device may test the model to be tested based on the common model defined by the protocol. For another example, the model to be tested is deployed in the network device, and at this time, the test device may test the model to be tested based on the common model defined by the protocol.

At present, the different test methods described above have their own problems. For the first type of test method, the test device usually needs to store a large number of models to adapt to different models to be tested. For the second type of test method, since the auxiliary test model is provided by the device 2, it is not an auxiliary test model that completely matches the model to be tested, and thus the accuracy of the test method may be reduced. For the third type of test method, the mismatch between the model to be tested and the common model will be more obvious, which may lead to a significant reduction in the accuracy of the test method.

Based on the above introduction, it can be seen that the above three types of test methods only roughly define the acquisition manners of the auxiliary test model for the models to be tested. This way of roughly defining the acquisition manners of the auxiliary test model may limit the accuracy of the test method for the model to be tested.

For example, if the model to be tested is deployed in the terminal device, and the peer model is transmitted to the terminal device by the network device, at this time, the terminal device itself does not have the peer model for the model to be tested, and thus the first model cannot be tested based on the first type of test method. That is, it is difficult for the terminal device to provide the peer model as an auxiliary test model to complete the test for the model to be tested.

For example, if the model to be tested is deployed in the network device, and the model to be tested and the peer model are trained by the terminal device, and then the terminal device transmits the model to be tested to the network device, at this time, the network device does not store the peer model, and thus the first model cannot be tested based on the first type of test method. That is, it is difficult for the network device to provide the peer model as an auxiliary test model to complete the test for the model to be tested.

For example, if the model to be tested is deployed in the terminal device, the model to be tested and the peer model are also trained by the terminal device, and the terminal device has not transmitted the peer model to the network device before use, at this time, the network device itself does not have the peer model, and thus it is impossible to test the first model based on the second type of test method described above. That is, it is difficult for the network device to provide the peer model as an auxiliary test model to complete the test for the model to be tested.

For example, if the model to be tested is deployed in the network device, the model to be tested and the peer model are also trained by the network device, and the network device has not transmitted the peer model to the terminal device before use, at this time, the terminal device itself does not have the peer model, and thus it is impossible to test the first model based on the second type of test method described above. That is, it is difficult for the terminal device to provide the peer model as an auxiliary test model to complete the test for the model to be tested.

In view of the above problems, the present application provides a method for model testing. In the method, a target device may select an auxiliary test model based on a first condition, so as to subsequently test a model to be tested (hereinafter, also referred to as a "first model") based on the auxiliary test model, which is helpful to improve the possibility of acquiring the auxiliary test model compared with the traditional auxiliary test model acquisition manner, thereby improving the accuracy of testing the first model.

In some implementations, the first model may be deployed in a network device or the first model may be deployed in a terminal device.

In some implementations, the auxiliary test model may include one or more of the following: a peer model of the first model; a reference test model or a predefined model.

The peer model may be a model that matches the first model, or the peer model may be a model that is used in conjunction with the first model. In some implementations, the peer model may be a model trained jointly with the first model. For example, in a two-sided solution, the peer model may be a model trained jointly with the first model. In other implementations, the peer model may be a model deployed in a peer device. Herein the peer device may be understood as a peer device of the device for deploying the first model. For example, the device for deploying the first model may communicate with the peer device.

Taking the first model being a CSI compression model as an example, the first model is deployed in a transmitter. Accordingly, the peer model may be a CSI recovery model, and the peer model is deployed at a receiver. Taking the first model being a CSI generation model as an example, the first model is deployed in the transmitter. Accordingly, the peer model may be a CSI reconstruction model, and the peer model is deployed at the receiver.

The reference test model (also referred to as a "reference model") may be a model that matches the first model, or the peer model may be a model that is used in conjunction with the first model. In some implementations, the reference test model may be a model trained jointly with the first model. For example, in a two-sided solution, the reference test model may be a model trained jointly with the first model. In other implementations, the reference test model may be a model that is not deployed in a peer device. Here the peer device may be understood as a peer device of the device for deploying the first model. For example, the reference test model may be a model prepared not to be deployed in the peer device but not yet deployed on the peer device. For another example, the reference test model may be a model that is prepared not to be deployed in the peer device but fails to be deployed in the peer device.

Taking the first model being a CSI compression model as an example, the reference test model may be a CSI recovery model, and both the CSI compression model and the CSI recovery model may be trained by the transmitter, here the CSI recovery model is not deployed in the receiver. Taking the first model being a CSI generation model as an example, the reference test model may be a CSI reconstruction model, and both the CSI generation model and the CSI reconstruction model may be trained by the receiver, here the CSI generation model is not deployed in the transmitter.

The embodiments of the present application do not limit the training manners for the reference test model and the first model. For example, the reference test model and the first model may be obtained based on joint training. For another example, the reference test model may be obtained by single-side training. For another example, the reference test model and the first model may be obtained based on sequential training.

The predefined model described above may be a predefined model used for the testing for the first model. In some implementations, the predefined model may be a model predefined via a protocol. For example, the predefined model may be the common model described earlier.

In the embodiments of the present application, the target device is not specifically limited. In some implementations, the target device may be a test device for testing the first model. In other implementations, the target device may be a device for deploying the first model, such as a terminal device or a network device. In other implementations, the target device may also be a device that trains the first model, such as a terminal device or a network device. In other implementations, the first model is two-side models, and accordingly, the target device may be a device for deploying the peer model.

In addition, in the embodiments of the present application, the device for deploying the first model may be the same as the device for training the first model. Or, the device for deploying the first model may be different from the device for training the first model.

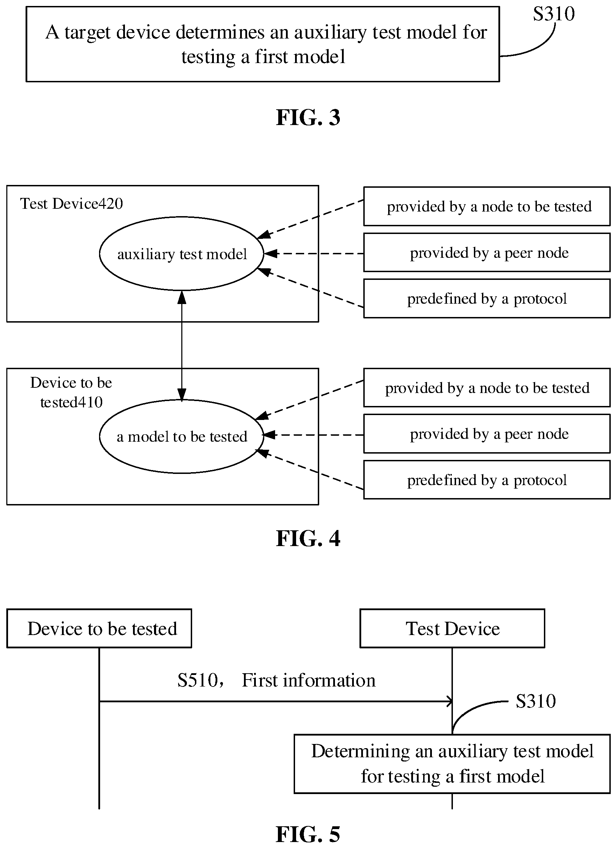

Hereinafter, a method for model testing according to an embodiment of the present application will be described with reference to FIG. 3. The method shown in FIG. 3 includes operation S310.

In operation S310, a target device determines an auxiliary test model for testing a first model.

In some implementations, the auxiliary test model is determined based on a first condition. Herein, the first condition is associated with one or more of: a training manner for the first model; an acquisition manner of the first model; a training manner for a peer model of the first model; an acquisition manner of the peer model of the first model; whether the first model is available; whether the peer model of the first model is available; whether the first model is successfully deployed; whether the peer model of the first model is successfully deployed; whether a reference model is successfully deployed; whether a peer model of the reference model is successfully deployed; whether a test device supports the peer model of the first model.

Taking the first condition being associated with the training manner as an example, herein, the training manner may include one or more of joint training, single-side training, or sequential training.

In some implementations, the above-described training manner may be associated with the target model, or the training manner may be used to train the target model. Herein the target model may include one or more of the following: a first model, a peer model of the first model, or a reference test model for the first model.

It should be noted that the training manner for the first model is matched with the training manner for the peer model of the first model. In some implementations, the first model and the peer model of the first model may be trained based on the same training manner. For example, the first model and the peer model of the first model may be trained based on joint training. Therefore, in some scenarios, in order to reduce the complexity of determining the first condition, only the training manner for the first model may be determined. In other scenarios, in order to reduce the complexity of determining the first condition, only the training manner for the peer model of the first model may be determined. Or, in the embodiments of the present application, both the training manner for the first model and the training manner for the peer model of the first model may be determined.

Taking the first condition being associated with the acquisition manner as an example, the acquisition manner may be associated with the target model, or the acquisition manner may be an acquisition manner of the target model. Herein, the target model may include one or more of the first model or the peer model of the first model.

In some implementations, the acquisition manner includes that the target model is transmitted by a providing device of the target model to a device for deploying the target model. The providing device of the target model may be a device capable of providing the target model. For example, the providing device may be a training device for the target model. Or, in the embodiments of the present application, the providing device may be a device that only acquires the target model but does not train the target model.

In the embodiments of the present application, the specific manner of transmitting the target model is not limited. In some implementations, the target model may be indicated by indication information indicating the target model. That is, the providing device of the target model may transmit the indication information of the target model to the device for deploying the target model to indicate the target model. Herein the indication information of the target model may include an identifier of the target model. The indication information of the target model may further include a function identifier corresponding to the target model.

In other implementations, the target model may be indicated by indicating the training data for the target model. That is, the providing device of the target model may transmit indication information of the training data for the target model to the device for deploying the target model to indicate the target model. Accordingly, the device for deploying the target model may train an initial model of the target model to obtain the target model based on the indicated training data. Herein the indication information of the training data for the target model may include an identifier of the training data for the target model.

In other implementations, the target model may be transmitted directly. That is, the providing device of the target model may transmit the target model to the device for deploying the target model. Transmitting target model may include one or more of the following: transmitting model parameter information of the target model or transmitting model structure information of the target model. Taking the transmission of model parameter information of the target model as an example, the device for deploying the target model may obtain the target model based on the combination of the model parameter information and pre-stored structure information of the target model. Taking the transmission of the model structure information of the target model as an example, the device for deploying the target model may obtain the target model based on the combination of the model structure information of the target model and pre-stored parameter information of the target model. Taking the transmission of the model structure information of the target model and the parameter information of the target model as an example, the device for deploying the target model can obtain the target model based on the model structure information of the target model and the parameter information of the target model.

In other implementations, the training data for the target model may be directly transmitted so that the device for deploying the target model trains the target model based on the training data. That is, the providing device of the target model may transmit the training data for the target model to the device for deploying the target model, and accordingly, the device for deploying the target model may obtain the target model based on the training data.

In other implementations, the acquisition manner may include that the target model is trained by a device for deploying the target model. That is, in the embodiments of the present application, the device for deploying the target model and the device for training the target model are the same device.

In order to facilitate understanding, the acquisition manner of the first model and the acquisition manner of the auxiliary test model in a communication scenario between the terminal device and the network device will be described below with reference to FIG. 4.

Referring to FIG. 4, for a first model in a device to be tested 410, the acquisition manner of the first model may include that the first model is provided by a node to be tested. The device node to be tested may be a terminal device or a network device. The acquisition manner of the first model may include that the first model is provided by a peer node of the node to be tested. Taking the node to be tested being the terminal device as an example, the peer node may be a network device. Taking the node to be tested being the network device as an example, the peer node may be the terminal device. The acquisition manner of the first model may include that the first model is predefined by a protocol.

For the test device 420, the acquisition manner of the auxiliary test model may include that the auxiliary test model is provided by a node to be tested, and the node of the device to be tested may be a terminal device or a network device. The acquisition manner of the auxiliary test model may include that the auxiliary test model is provided by a peer node of the node to be tested. Taking the node to be tested being the terminal device as an example, the peer node may be the network device. Taking the node to be tested being the network device as an example, the peer node may be the terminal device. The acquisition manner of the auxiliary test model may include that the auxiliary test model is predefined by a protocol.

Taking the first condition being associated with whether the target model is available as an example, herein, the target model may include one or more of a first model or a peer model of the first model.

In some implementations, whether the target model is available may include whether the target model can be obtained by the test device. That is, the first condition may include whether the test device can obtain the target model.

For example, it is assumed that a peer model of the first model may be deployed in the device 1, the first model and the peer model of the first model are trained by the device 2, and the test device obtains the peer model of the first model from the device 1. At this time, if the device 2 does not transmit the peer model of the first model to the device 1, the peer model of the first model is not stored in the device 1, and in this case, the test device cannot acquire the peer model of the first model from the device 1.

For another example, it is assumed that a first model can be deployed in the device 1, the first model and a peer model of the first model are trained by the device 2, and the test device acquires the first model from the device 1. At this time, if the device 2 does not transmit the first model to the device 1, the first model is not stored in the device 1, and in this case, the test device cannot acquire the first model from the device 1.

Taking the first condition being associated with whether the target model is successfully deployed as an example, the target model may include one or more of: a first model, a peer model of the first model; a reference model or a peer model of the reference model.

In some implementations, whether the target model is successfully deployed may include one or more of the following: whether the target model is successfully transmitted; whether indication information of the target model is successfully transmitted; whether the training data for the target model is successfully transmitted; or whether indication information of the training data for the target model is successfully transmitted.

In the embodiments of the present application, whether the target model is successfully deployed may include whether the providing device of the target model successfully deploys the target model in a device of the target model (hereinafter referred to as "deployment device"). The providing device of the target model may be a device capable of providing the target model. For example, the providing device may be a training device for the target model. For another example, the providing device may be a device which only acquires the target model but does not train the target model.

Accordingly, whether the target model is successfully deployed may include one or more of the following: whether the providing device transmits the target model to the deployment device, whether the providing device successfully transmits indication information of the target model to the deployment device, whether the providing device transmits the training data for the target model to the deployment device, and whether the providing device successfully transmits indication information of the training data for the target model to the deployment device.

Taking the target model being the first model as an example, the first condition is associated with whether the first model is successfully deployed. Whether the first model is successfully deployed is associated with one or more of the following: whether the first model is successfully transmitted; whether the first model is successfully indicated; whether training data for the first model is successfully transmitted; or whether the training data for the first model is successfully indicated.

Taking the target model being a peer model of the first model as an example, the first condition is associated with whether the peer model of the first model is successfully deployed. Whether the peer model of the first model is successfully deployed is associated with one or more of: whether the peer model of the first model is successfully transmitted; whether the peer model of the first model is successfully indicated; whether training data for the peer model of the first model is successfully transmitted; or whether the training data for the peer model of the first model is successfully indicated; and/or

Taking the target model being a reference model as an example, the first condition is associated with whether the reference model is successfully deployed. Whether the reference model is successfully deployed is associated with one or more of the following: whether the reference model is successfully transmitted; whether the reference model is successfully indicated; whether training data for the reference model is successfully transmitted; or whether the training data for the reference model is successfully indicated; and/or
Taking the target model being a peer model of the reference model as an example, the first condition is associated with whether the peer model of the reference model is successfully deployed. Whether the peer model of the reference model is successfully deployed is associated with one or more of the following: whether the peer model of the reference model is successfully transmitted; whether the peer model of the reference model is successfully indicated; whether training data for the peer model of the reference model is successfully transmitted; or whether the training data for the peer model of the reference model is successfully indicated.

Taking the first condition being associated with whether the test device supports the peer model of the first model as an example, alternatively, the first condition may include that the test device supports the peer model of the first model and the test device does not support the peer model of the first model.

In some scenarios, the model has multiple compilation formats, for example, a TensorFlow model format, an open neural network exchange (ONNX) model format, a Keras model format, a convolutionary architecture for fast feature embedding (Caffe) Model format, a PyTorch model format and the like. The measurement device may not be able to recognize each compilation format, and at this time, there may be a test device that can acquire the peer model of the first model, but the test device cannot recognize the peer model of the first model, that is, the test device does not support the peer model of the first model. In the embodiments of the present application, the reason why the test device cannot recognize the peer model of the first model is not specifically limited. For example, the reason why the test device does not support the peer model of the first model may further include that the test device cannot recognize an identifier of the peer model of the first model.

The first condition in the embodiments of the present application has been described above, and the first condition can be used alone to select the auxiliary test model for the first model. Or, in the embodiments of the present application, the above-described first conditions may be used in combination with each other to select the auxiliary test model of the first model. Hereinafter, the description will be made in conjunction with Implementations 1 to 6. It should be understood that the combination of the first conditions in the embodiments of the present application is not limited thereto.

First Implementation: If the first condition includes that the first model and the peer model of the first model is trained by the first device, and the peer model of the first model is deployed by the first device for the second device, the auxiliary test model is the peer model of the first model.

In some implementations, the peer model of the first model is indicated by the first device to the test device. For example, the first device may indicate to the test device an identifier of the peer model of the first model. In other implementations, the peer model of the first model is transmitted by the first device to the test device of the first model. For example, the first device may transmit model structure information and/or model parameter information of the peer model of the first model to the test device.

In some implementations, the operation that the first device deploys the peer model of the first model for the second device may include that the first device may transmit the peer model of the first model to the second device. For example, the first device may transmit model structure information and/or model parameter information of the peer model of the first model to the second device. In other implementations, the operation that the first device deploys the peer model of the first model for the second device may include that the first device may transmit training data for the peer model of the first model to the second device. In other implementations, the operation that the first device deploys the peer model of the first model for the second device may include that the first device may indicate the peer model of the first model to the second device. For example, the first device may indicate an identifier of the peer model of the first model to the second device. In other implementations, the operation that the first device deploys the peer model of the first model for the second device may include that the first device may indicate training data for the peer model of the first model to the second device. For example, the first device may indicate to the second device an identifier of the training data for the peer model of the first model.

Assuming that the first device is a network device, the first model is deployed in the network device, the first condition includes that the network device trains the first model and the peer model of the first model, and the network device deploys the peer model of the first model for the terminal device. At this time, the auxiliary test model for the first model may be the peer model of the first model provided by the network device.

Taking the first model being a CSI reconstruction model, and the peer model of the first model being a CSI generation model as an example, the CSI generation model is deployed in the terminal device, and the CSI reconstruction model is deployed in the network device. The first condition includes that the network device trains the CSI generation model and the CSI reconstruction model, and the network device transmits training data for the CSI generation model to the terminal device, and/or the network device transmits the CSI generation model to the terminal device. At this time, the auxiliary test model for the CSI reconstruction model may be the CSI generation model provided by the network device.

Taking the first model being a CSI recovery model, and the peer model of the first model being a CSI compression model as an example, the CSI recovery model is deployed in the network device, and the CSI compression model is deployed in the terminal device. The first condition includes that the network device trains the CSI compression model and the CSI recovery model, and the network device transmits training data for the CSI compression model to the terminal device, and/or the network device transmits the CSI compression model to the terminal device. At this time, the auxiliary test model for the CSI recovery model may be a CSI reconstruction model provided by the network device.

Assuming that the first device is a terminal device, the first model is deployed in the terminal device, the first condition includes that the terminal device trains the first model and the peer model of the first model, and the terminal device deploys the peer model of the first model for the network device. At this time, the auxiliary test model for the first model may be the peer model of the first model provided by the terminal device.

Taking the first model being a CSI generation model, and the peer model of the first model being a CSI reconstruction model as an example, the CSI generation model is deployed in the terminal device, and the CSI reconstruction model is deployed in the network device. The first condition includes that the terminal device trains the CSI generation model and the CSI reconstruction model, and the terminal device transmits training data for the CSI reconstruction model to the network device, and/or the terminal device transmits the CSI reconstruction model to the network device. At this time, the auxiliary test model for the CSI generation model may be the CSI reconstruction model provided by the terminal device.

Taking the first model being a CSI compression model, and the peer model of the first model being a CSI recovery model as an example, the CSI recovery model is deployed in the network device, and the CSI compression model is deployed in the terminal device. The first condition includes that the terminal device trains the CSI compression model and the CSI recovery model, the terminal device transmits training data for the CSI recovery model to the network device, and/or the terminal device transmits the CSI recovery model to the network device. At this time, the auxiliary test model for the CSI compression model may be the CSI recovery model provided by the terminal device.

Second Implementation: If the first condition includes that the first model and the peer model of the first model is trained by the first device, and the first model is deployed by the first device for the second device, the auxiliary test model is the peer model of the first model.

In some implementations, the peer model of the first model is indicated by the first device to the test device. For example, the first device may indicate to the test device an identifier of the peer model of the first model. In other implementations, the peer model of the first model is transmitted by the first device to the test device of the first model. For example, the first device may transmit model structure information and/or model parameter information of the peer model of the first model to the test device.

In some implementations, the operation that the first device deploys the first model for the second device may include that the first device may transmit the first model to the second device. For example, the first device may transmit model structure information and/or model parameter information of the first model to the second device. In other implementations, the operation that the first device deploys the first model for the second device may include that the first device may transmit training data for the first model to the second device. In other implementations, the operation that the first device deploys the first model for the second device may include that the first device may indicate the first model to the second device. For example,, the first device may indicate an identifier of the first model to the second device. In other implementations, the operation that the first model deploys the first device for the second device may include that the first device may indicate training data for the first model to the second device. For example, the first device may indicate to the second device an identifier of the training data for the first model.

Assuming that the first device is a network device, the first model is a model that can be deployed on the terminal device, the first condition includes that the network device trains the first model and the peer model of the first model, and the network device deploys the first model for the terminal device. At this time, the auxiliary test model for the first model may be the peer model of the first model provided by the network device.

Taking the first model being a CSI generation model, and the peer model of the first model being a CSI reconstruction model as an example, the CSI generation model is deployed in the terminal device, and the CSI reconstruction model is deployed in the network device. The first condition includes that the network device trains the CSI generation model and the CSI reconstruction model, and the network device transmits training data for the CSI generation model to the terminal device, and/or the network device transmits the CSI generation model to the terminal device. At this time, the auxiliary test model for the CSI generation model may be the CSI reconstruction model provided by the network device.

Taking the first model being a CSI compression model, and the peer model of the first model being a CSI recovery model as an example, the CSI compression model is deployed in the terminal device, and the CSI recovery model is deployed in the network device. The first condition includes that the network device trains the CSI compression model and the CSI recovery model, and the network device transmits training data for the CSI compression model to the terminal device, and/or the network device transmits the CSI compression model to the terminal device. At this time, the auxiliary test model for the CSI compression model may be the CSI recovery model provided by the network device.

Assuming that the first device is a terminal device, the first model is a model that can be deployed in the network device, the first condition includes that the terminal device trains the first model and the peer model of the first model, and the terminal device deploys the first model for the network device. At this time, the auxiliary test model for the first model may be the peer model of the first model provided by the terminal device.

Taking the first model being a CSI reconstruction model, and the peer model of the first model being a CSI generation model as an example, the CSI reconstruction model is deployed in the network device, and the CSI generation model is deployed in the terminal device. The first condition includes that the terminal device trains the CSI generation model and the CSI reconstruction model, and the terminal device transmits training data for the CSI reconstruction model to the network device, and/or the terminal device transmits the CSI reconstruction model to the network device. At this time, the auxiliary test model for the CSI reconstruction model may be the CSI generation model provided by the terminal device.

Taking the first model being a CSI recovery model, and the peer model of the first model being a CSI compression model as an example, the CSI compression model is deployed in the terminal device, and the CSI recovery model is deployed in the network device. The first condition includes that the terminal device trains the CSI compression model and the CSI recovery model, the terminal device transmits training data for the CSI recovery model to the network device, and/or the terminal device transmits the CSI recovery model to the network device. At this time, the auxiliary test model for the CSI recovery model may be a CSI compression model provided by the terminal device.

Third Implementation: If the first condition includes that the first model and the reference model are trained by the first device, the reference model can be deployed by the first device for the second device, and the second device does not deploy the reference model, the auxiliary test model is the reference model.

In some implementations, the reference model may be deployed by the first device for the second device, and the second device does not deploy the reference model, which may be understood as that the second device may obtain the reference model but has not yet obtained it. For example, the first device may be a network device, and the second device may be a terminal device, that is, the first condition may be understood as that the network device trains the first model and the reference model, and the first model needs to be tested when the terminal device does not enter a cell within the coverage range of the network device after leaving the factory. At this time, the reference model has not been deployed in the terminal device, but the reference model can be deployed for the terminal device after the terminal device enters the cell.

For another example, the first device may be a terminal device, and the second device may be a network device. That is, the first condition may be understood as that the terminal device trains the first model and the reference model, and the first model needs to be tested when the terminal device does not enter the cell within the coverage range of the network device after leaving the factory. At this time, the reference model has not been deployed to the network device, but the reference model can be deployed for the network device after the terminal device enters the cell.

In some implementations, the operation that the first device deploys the reference model for the second device and the reference model has not been deployed in the second device may include that the first device may transmit the reference model to the second device, but the first device has not yet transmitted the reference model to the second device. For example, the first device may transmit the model structure information and/or the model parameter information of the reference model to the second device, but the first device has not transmitted the model structure information and/or the model parameter information of the reference model to the second device. In other implementations, the operation that the first device deploys the reference model for the second device and the reference model has not been deployed in the second device may include that the first device may transmit training data for the reference model to the second device, but the first device has not yet transmitted the training data for the reference model to the second device. In other implementations, the operation that the first device deploys the reference model for the second device, and the reference model has not been deployed in the second device may include that the first device may indicate the reference model to the second device, but the first device has not indicated the reference model to the second device. For example, the first device may indicate an identifier of the reference model to the second device, but the first device has not indicated an identifier of the reference model to the second device. In other implementations, the operation that the first device deploys the reference model for the second device and the reference model has not been deployed in the second device may include that the first device may indicate training data for the reference model to the second device, but the first device has not indicated the training data for the reference model to the second device. For example, the first device may indicate the identifier of training data for the reference model to the second device, but the first device has not indicated the identifier of training data for the reference model to the second device.

In some implementations, the reference model is indicated by the first device to the test device. For example, the first device may indicate an identifier of the reference model to the test device. In other implementations, the reference model is transmitted by the first device to the test device of the first model. For example, the first device may transmit model structure information and/or model parameter information of the reference model to the test device.

Assuming that the first device is a network device, the first model is deployed in the network device, the first condition includes that the network device trains the first model and the reference model, and that the reference model may be deployed by the network device for the terminal device, and the reference model has not been deployed in the terminal device. At this time, the auxiliary test model for the first model may be a reference model provided by the network device.

Taking the first model being a CSI reconstruction model and the reference model being a CSI generation model as an example, the CSI generation model is deployed in the terminal device, and the CSI reconstruction model is deployed in the network device. The first condition includes that the network device trains the CSI generation model and the CSI reconstruction model, and that the network device may transmit the training data for the CSI generation model to the terminal device, but the network device has not transmitted the training data for the CSI generation model to the terminal device. At this time, the auxiliary test model for the CSI reconstruction model may be the CSI generation model provided by the network device.

Taking the first model being a CSI reconstruction model and the reference model being a CSI generation model as an example, the CSI generation model is deployed in the terminal device, and the CSI reconstruction model is deployed in the network device. The first condition includes that the network device trains the CSI generation model and the CSI reconstruction model, and that the network device may transmit the CSI generation model to the terminal device, but the network device has not transmitted the CSI generation model to the terminal device. At this time, the auxiliary test model for the CSI reconstruction model may be the CSI generation model provided by the network device.

Taking the first model being a CSI recovery model and the reference model being a CSI compression model as an example, the CSI recovery model is deployed in the network device, and the CSI compression model is deployed in the terminal device. The first condition includes that the network device trains the CSI compression model and the CSI recovery model, and that the network device may transmit the training data for the CSI compression model to the terminal device, but the network device has not transmitted the training data for the CSI compression model to the terminal device. At this time, the auxiliary test model for the CSI recovery model may be the CSI compression model provided by the network device.

Taking the first model being a CSI recovery model and the reference model being a CSI compression model as an example, the CSI recovery model is deployed in the network device, and the CSI compression model is deployed in the terminal device. The first condition includes that the network device trains the CSI compression model and the CSI recovery model, and the network device may transmit the CSI compression model to the terminal device, but the network device has not transmitted the CSI compression model to the terminal device. At this time, the auxiliary test model for the CSI recovery model may be the CSI compression model provided by the network device.

Assuming that the first device is a terminal device, the first model is deployed in the terminal device, the first condition includes that the terminal device trains the first model and the reference model, and that the terminal device may deploy the reference model for the network device, but the reference model has not yet been deployed in the network device. At this time, the auxiliary test model for the first model may be the reference model provided by the terminal device.

Taking the first model being a CSI generation model and the reference model being a CSI reconstruction model as an example, the CSI generation model is deployed in the terminal device, and the CSI reconstruction model is deployed in the network device. The first condition includes that the terminal device trains the CSI generation model and the CSI reconstruction model, and that the terminal device may transmit the training data for the CSI reconstruction model to the network device, but the terminal device has not transmitted the training data for the CSI reconstruction model to the network device. At this time, the auxiliary test model for the CSI generation model may be the CSI reconstruction model provided by the terminal device.

Taking the first model being a CSI generation model and the reference model being a CSI reconstruction model as an example, the CSI generation model is deployed in the terminal device, and the CSI reconstruction model is deployed in the network device. The first condition includes that the terminal device trains the CSI generation model and the CSI reconstruction model, and the terminal device may transmit the CSI reconstruction model to the network device, but the terminal device has not transmitted the CSI reconstruction model to the network device. At this time, the auxiliary test model for the CSI generation model may be the CSI reconstruction model provided by the terminal device.

Taking the first model being a CSI compression model and the reference model being a CSI recovery model as an example, the CSI recovery model is deployed in the network device, and the CSI compression model is deployed in the terminal device. The first condition includes that the terminal device trains the CSI compression model and the CSI recovery model, and that the terminal device may transmit the training data for the CSI recovery model to the network device, but the terminal device has not transmitted the training data for the CSI recovery model to the network device. At this time, the auxiliary test model for the CSI compression model may be the CSI recovery model provided by the terminal device.

Taking the first model being a CSI compression model and the reference model being a CSI recovery model as an example, the CSI recovery model is deployed in the network device, and the CSI compression model is deployed in the terminal device. The first condition includes that the terminal device trains the CSI compression model and the CSI recovery model, and that the terminal device may transmit the CSI recovery model to the network device, but the terminal device has not transmitted the CSI recovery model to the network device. At this time, the auxiliary test model for the CSI compression model may be the CSI recovery model provided by the terminal device.

Fourth Implementation: If the first condition includes that the first model and the reference model are trained by the first device, and the first model may be deployed by the first device for the second device, and the first model has not been deployed in the second device, the auxiliary test model is the reference model.

In some implementations, the first model may be deployed by the first device for the second device, and the first model has not been deployed in the second device, which may be understood as that the second device may obtain the first model but has not yet obtained it. For example, the first device may be a network device, and the second device may be a terminal device. That is, the first condition may be understood as that the network device trains the first model and the reference model, and the first model needs to be tested when the terminal device does not enter the cell within the coverage range of the network device after leaving the factory. At this time, the first model has not been deployed to the terminal device, but the first model can be deployed for the terminal device after the terminal device enters the cell.

For another example, the first device may be a terminal device, and the second device may be a network device. That is, the first condition may be understood as that the terminal device trains the first model and the reference model, and the first model needs to be tested when the terminal device does not enter the cell within the coverage range of the network device after leaving the factory. At this time, the first model has not been deployed to the network device, but the first model can be deployed for the network device after the terminal device enters the cell.

In some implementations, the first device may deploy the first model for the second device and the first model has not been deployed in the second device, which may include that the first device may transmit the first model to the second device, but the first device has not yet transmitted the first model to the second device. For example, the first device may transmit the model structure information and/or the model parameter information of the first model to the second device, but the first device has not transmitted the model structure information and/or the model parameter information of the first model to the second device. In other implementations, the first device deploys the first model for the second device and the first model is not deployed in the second device, which may include that the first device may transmit training data for the first model to the second device, but the first device has not yet transmitted the training data for the first model to the second device. In other implementations, the first device may deploy the first model for the second device and the first model has not been deployed in the second device, which may include that the first device may indicate the first model to the second device, but the first device has not indicated the first model to the second device. For example, the first device may indicate the identifier of the first model to the second device, but the first device has not indicated the identifier of the first model to the second device. In other implementations, the first device may deploy the first model for the second device and the first model has not been deployed in the second device, which may include that the first device may indicate training data for the first model to the second device, but the first device has not indicated the training data for the first model to the second device. For example, the first device may indicate the identifier of training data for the first model to the second device, but the first device has not indicated the identifier of training data for the first model to the second device.

In some implementations, the reference model is indicated by the first device to the test device. For example, the first device may indicate an identifier of the reference model to the test device. In other implementations, the reference model is transmitted by the first device to the test device of the first model. For example, the first device may transmit model structure information and/or model parameter information of the reference model to the test device.

It should be noted that, in some scenarios, the second device may acquire the reference model. Accordingly, the second device may determine a model to be tested (also referred to as a peer model of the reference model) based on the reference model. Alternatively, the second device may acquire the model to be tested corresponding to the reference model based on the reference model. Alternatively, the second device may select the model to be tested corresponding to the reference model based on the reference model. Alternatively, the second device may perform testing using the model to be tested corresponding to the reference model based on the reference model.

Assuming that the first device is a network device, the reference model is deployed in the network device, the first condition includes that the network device trains the first model and the reference model, and that the first model may be deployed by the network device for the terminal device, but the first model has not been deployed in the terminal device. At this time, the auxiliary test model for the first model may be the reference model provided by the network device.

In some scenarios, if the terminal device may obtain the reference model provided by the network device, at this time, the terminal device can obtain, select, or use the corresponding model to be tested for testing based on the reference model, and accordingly, the test device can use the reference model as the auxiliary test model.

Taking the first model being a CSI generation model and the reference model being a CSI reconstruction model as an example, the CSI generation model is deployed in the terminal device, and the CSI reconstruction model is deployed in the network device. The first condition includes that the network device trains the CSI generation model and the CSI reconstruction model, and that the network device may transmit training data for the CSI generation model to the terminal device, but the network device has not transmitted the training data for the CSI generation model to the terminal device. At this time, the auxiliary test model for the CSI generation model may be the CSI reconstruction model provided by the network device.

Taking the first model being a CSI generation model and the reference model being a CSI reconstruction model as an example, the CSI generation model is deployed in the terminal device, and the CSI reconstruction model is deployed in the network device. The first condition includes that the network device trains the CSI generation model and the CSI reconstruction model, and that the network device may transmit the CSI generation model to the terminal device, but the network device has not transmitted the CSI generation model to the terminal device. At this time, the auxiliary test model for the CSI generation model may be the CSI reconstruction model provided by the network device.

Taking the first model being a CSI compression model and the reference model being a CSI recovery model as an example, the CSI recovery model is deployed in the network device, and the CSI compression model is deployed in the terminal device. The first condition includes that the network device trains the CSI compression model and the CSI recovery model, and that the network device may transmit training data for the CSI compression model to the terminal device, but the network device has not transmitted the training data for the CSI compression model to the terminal device. At this time, the auxiliary test model for the CSI compression model may be the CSI recovery model provided by the network device.

Taking the first model being a CSI compression model and the reference model being a CSI recovery model as an example, the CSI recovery model is deployed in the network device, and the CSI compression model is deployed in the terminal device. The first condition includes that the network device trains the CSI compression model and the CSI recovery model, and the network device transmits the CSI compression model to the terminal device, but the network device has not transmitted the CSI compression model to the terminal device. At this time, the auxiliary test model for the CSI compression model may be the CSI recovery model provided by the network device.

Assuming that the first device is a terminal device, the reference model is deployed in the terminal device, the first condition includes that the terminal device trains the first model and the reference model, and that the terminal device may deploy the first model for the network device, but the first model has not yet been deployed in the network device. At this time, the auxiliary test model for the first model may be the reference model provided by the terminal device.

In some scenarios, if the network device can obtain the reference model provided by the terminal device, at this time, the network device can obtain, select, or use the corresponding model to be tested for testing based on the reference model. Accordingly, the test device can use the reference model as the auxiliary test model.

Taking the first model being a CSI reconstruction model and the reference model being a CSI generation model as an example, the CSI generation model is deployed in the terminal device, and the CSI reconstruction model is deployed in the network device. The first condition includes that the terminal device trains the CSI generation model and the CSI reconstruction model, and that the terminal device may transmit the training data for the CSI reconstruction model to the network device, but the terminal device has not transmitted the training data for the CSI reconstruction model to the network device. At this time, the auxiliary test model for the CSI reconstruction model may be the CSI generation model provided by the terminal device.

Taking the first model being a CSI reconstruction model and the reference model being a CSI generation model as an example, the CSI generation model is deployed in the terminal device, and the CSI reconstruction model is deployed in the network device. The first condition includes that the terminal device trains the CSI generation model and the CSI reconstruction model, and the terminal device may transmit the CSI reconstruction model to the network device, but the terminal device has not transmitted the CSI reconstruction model to the network device. At this time, the auxiliary test model for the CSI reconstruction model may be the CSI generation model provided by the terminal device.

Taking the first model being a CSI recovery model and the reference model being a CSI compression model as an example, the CSI recovery model is deployed in the network device, and the CSI compression model is deployed in the terminal device. The first condition includes that the terminal device trains the CSI compression model and the CSI recovery model, and that the terminal device may transmit training data for the CSI recovery model to the network device, but the terminal device has not transmitted the training data for the CSI recovery model to the network device. At this time, the auxiliary test model for the CSI recovery model may be the CSI compression model provided by the terminal device.

Taking the first model being a CSI recovery model and the reference model being a CSI compression model as an example, the CSI recovery model is deployed in the network device, and the CSI compression model is deployed in the terminal device. The first condition includes that the terminal device trains the CSI compression model and the CSI recovery model, and that the terminal device may transmit the CSI recovery model to the network device, but the terminal device has not transmitted the CSI recovery model to the network device. At this time, the auxiliary test model for the CSI recovery model may be the CSI compression model provided by the terminal device.

Fifth Implementation: The first condition includes that the test device does not support the peer model of the first model, and the auxiliary test model is a predefined model associated with the testing for the first model. Herein, an explanation that the test device does not support the peer model of the first model can be seen in the above description. Additionally, the predefined model may, for example, be a common model, as can be described above. For the sake of brevity, it will not be repeated here.

In some implementations, if the peer model of the first model is provided by the providing device, the statement that the test device does not support the peer model of the first model may be replaced with the statement that the test device does not support the model provided by the providing device. Herein, the model provided by the providing device may include the peer model of the first model. In addition, in the embodiments of the present application, the providing device may be a device that can provide the peer model of the first model, such as, a training device for the peer model of the first model; and/or the providing device may be a device in which the first model is deployed; the providing device may be a device in which the peer model of the first model is deployed.

Taking the providing device being a terminal device as an example, the statement that the test device does not support the peer model of the first model may be replaced with that the statement that the test device does not support the model provided by the terminal device.

Assuming that the first device is a terminal device, the first model is a model that can be deployed in the network device, the first condition includes that the terminal device trains the first model and the peer model of the first model, the terminal device deploys the first model for the network device, and the test device does not support the model provided by the terminal device. At this time, the auxiliary test model for the first model may be a predefined model associated with the testing for the first model.

Assuming that the first device is a terminal device, the first model is deployed in the terminal device, the first condition includes that the terminal device trains the first model and the peer model of the first model, the terminal device deploys the peer model of the first model for the network device, and the test device does not support the model provided by the terminal device. At this time, the auxiliary test model for the first model may be a predefined model associated with the testing for the first model.

Taking the providing device being a network device as an example, the statement that the test device does not support the peer model of the first model may be replaced with the statement that the test device does not support the model provided by the network device.

Assuming that the first device is a network device, the first model is a model that may be deployed on the terminal device, the first condition includes that the network device trains the first model and the peer model of the first model, the network device deploys the first model for the terminal device, and the test device does not support the model provided by the network device. At this time, the auxiliary test model for the first model may be a predefined model associated with the testing for the first model.

Assuming that the first device is a network device, the first model is deployed in the network device, the first condition includes that the network device trains the first model and the peer model of the first model, the network device deploys the peer model of the first model for the terminal device, and the test device does not support the model provided by the network device. At this time, the auxiliary test model for the first model may be a predefined model associated with the testing for the first model.

It should be noted that, in the embodiments of the present application, the statement that the test device does not support the model provided by the providing device may also be understood as that the test device does not support the reference model provided by the providing device. Accordingly, the implementation of the first condition and the selection manner of the auxiliary test model are the same as those described above, and only the peer model of the first model is replaced with the reference model, and will not be repeated here for the sake of brevity.

Sixth Implementation: If the first condition includes that a second model and a peer model of the second model is trained by the first device, and the second model is not deployed to the second device, the model to be tested is a first model deployed in the second device, and the auxiliary test model is a predefined model associated with the testing for the first model.

That is, when the second model is not deployed to the second device, if the model in the second device is to be tested, at this time, the model to be tested may be the first model deployed in the second device, and accordingly, the auxiliary test model for the first model may be a predefined model associated with the testing for the first model.

In some implementations, the statement that the second model is not deployed to the second device may include that the first device has not yet transmitted the second model to the second device. For example, the first device has not transmitted model structure information and/or model parameter information of the second model to the second device. In other implementations, the statement that the second model is not deployed in the second device may include that the first device has not yet transmitted training data for the second model to the second device. In other implementations, the statement that the second model is not deployed in the second device may include that the first device has not indicated the second model to the second device. For example, the first device has not indicated the identifier of the second model to the second device. In other implementations, the statement that the second model is not deployed in the second device may include that the first device has not yet indicated training data for the second model to the second device. For example, the first device has not indicated the identifier of the training data for the second model to the second device.

Assuming that the first device is a terminal device, the second device is a network device, the first condition includes the second model and the peer model of the second model are trained by the terminal device, and the second model is not deployed to the network device, the model to be tested is a first model deployed in the network device, and the auxiliary test model is a predefined model associated with the testing for the first model.

Assuming that the first device is a network device, the second device is a terminal device, the first condition includes that the second model and the peer model of the second model are trained by the network device, and the second model is not deployed to the terminal device, the model to be tested is the first model deployed in the terminal device, and the auxiliary test model is a predefined model associated with the testing for the first model.

Based on the first condition described above, it can be seen that the manner for selecting the auxiliary test model associated with different first conditions is introduced in the embodiments of the present application. The above first condition introduces information such as the training manner of the model, the acquisition manner of the model (for example, the first model, the peer model of the first model), whether the first model and/or the peer model are available during testing, into the manner of selecting the auxiliary test model, which helps to avoid some unreasonable manner for selecting the auxiliary test model.

In order to facilitate understanding, the auxiliary test model for the model to be tested in the embodiments of the present application is described below by taking a network device and a terminal device as an example with reference to Table 1. Referring to Table 1, Table 1 shows an acquisition manner of the auxiliary test model for the model to be tested under the first condition. For convenience of description, hereinafter, a model deployed in a network device is referred to as a "network model", and a model deployed in a terminal device is referred to as a "terminal model". In addition, as the reference model, a reference model that may be deployed in a network device but has not deployed in the network device is referred to as a "network reference model", and a reference model that may be deployed in a terminal device but has not deployed in the terminal device is referred to as a "terminal reference model".

**Table 1**

| **Identifier** | **First condition** | **Model to be tested** | **Auxiliary test model** |
|---|---|---|---|
| 1 | The network device trains and obtains a network model and a terminal model, and the network device transmits the terminal model to the terminal device | Network model | The terminal model provided by the network device is used as the auxiliary test model |
| 2 | The network device trains and obtains a network model and a terminal model, and the network device transmits the terminal model to the terminal device | Terminal model | The network model provided by the network device is used as the auxiliary test model |
| 3 | The terminal device trains and obtains a network model and a terminal model, and the terminal device transmits the network model to the network device | Network model | The terminal model provided by the terminal device is used as the auxiliary test model |
| 4 | The terminal device trains and obtains a network model and a terminal model, and the terminal device transmits the network model to the network device | Terminal model | The network model provided by the terminal device is used as the auxiliary test model |
| 5 | The test device does not support that a terminal model provided by the terminal device is used as the auxiliary test model, or the test device does not support that a terminal model provided by the network device as the auxiliary test model | Network model | A predefined model associated with the test of the network model is used as the auxiliary test model |
| 6 | The test device does not support that a network model provided by the terminal device is used as the auxiliary test model, or the test device does not support that a network model provided by the network device is used as the auxiliary test model | Terminal model | A predefined model associated with the test of the terminal model is used as the auxiliary test model |
| 7 | The model used by the network device needs to be transmitted to the network device by the terminal device for use, and the network device has not yet obtained the network model from the terminal device during the test | Network model | A predefined model associated with the test of the network model is used as the auxiliary test model |
| 8 | The model used by the terminal device needs to be transmitted to the terminal device by the network device for use, and the terminal device has not yet obtained the terminal model from the network device during the test | Terminal model | a predefined model associated with the test of the terminal model is used as the auxiliary test model |
| 9 | The model used by the network device needs to be transmitted to the network device by the terminal device for use, and the network device has not yet obtained the network model from the terminal device during testing. The network device can obtain the network reference model given by the terminal device, or the network device can obtain the terminal reference model given by the terminal device | Network model | The terminal reference model given by the terminal device is used as the auxiliary test model |
| 10 | The model used by the terminal device needs to be transmitted to the terminal device by the network device for use, and the terminal device has not yet obtained the terminal model from the network device during the test. The terminal device can obtain the terminal reference model given by the network device, or the terminal device can obtain the network reference model given by the network device | Terminal model | The network reference model given by the network device is used as the auxiliary test model |

In conjunction with the above description, a manner of acquiring the auxiliary test model in the embodiments of the present application is introduced. In the below description, the information exchange scheme between the test device and the device to be tested (that is, the device in which the model to be tested is deployed, also referred to as "the device for deploying the first model ") in the embodiments of the present application is described.

In some implementations, if a target device is a test device, the method further includes an operation that a device to be tested transmits first information to the test device (see operation S510). In the embodiments of the present application, the transmission of the first information may be used in combination with the selection of the auxiliary test model described above, and at this time, operation S510 may be performed before operation S310.

In some implementations, the first information includes one or more of: information for determining a first condition, information for indicating an auxiliary test model, or information for indicating a first model.

Taking the first information including information for determining the first condition as an example, in some implementations, the information for determining the first condition may include indication information corresponding to the first condition (e.g., an identifier of the first condition shown in Table 1). In other implementations, the information used to determine the first condition may include the first condition. For example, the information for determining the first condition may include one or more of the following: a training manner for the first model; an acquisition manner of the first model; a training manner for a peer model of the first model; an acquisition manner of the peer model of the first model; whether the first model is available; whether the peer model of the first model is available; whether the first model is successfully deployed; whether the peer model of the first model is successfully deployed; whether the reference model is successfully deployed; whether the peer model of the reference model is successfully deployed.

Taking the scenario of the network device and the terminal device as an example, for example, the information for determining the first condition may indicate that the model used by the terminal device is transmitted by the network device to the terminal device, or that the model used by the terminal device is obtained based on training data transmitted by the network device. For another example, the information for determining the first condition may indicate that the model used by the terminal device is to be transmitted by the network device to the terminal device, but the terminal device has not yet obtained the model transmitted by the network device to the terminal device. For another example, the information for determining the first condition may indicate that the model used by the terminal device is generated by the terminal device itself. For another example, the information for determining the first condition may indicate that the terminal device uses a predefined model. For another example, the information for determining the first condition may indicate that the model used by the network device is transmitted by the terminal device to the network device, or that the model used by the network device is trained by data transmitted by the terminal device. For another example, the information for determining the first condition may indicate that the model used by the network device is to be transmitted by the terminal device to the network device, but the network device has not yet obtained the model transmitted by the terminal device to the network device. For another example, the information for determining the first condition may indicate that the model used by the network device is generated by the network device itself. For another example, the information for determining the first condition may indicate that the network device uses a model predefined by a protocol.

Taking the first information including information for indicating the auxiliary test model as an example, in some implementations, the information for indicating the auxiliary test model may include indication information (e.g., a model ID) of the auxiliary test model. In other implementations, the information for indicating the auxiliary test model may include a model type of the auxiliary test model.

Taking the scenario of the network device and the terminal device as an example, for example, the information for indicating the auxiliary test model may indicate that the test device uses a model provided by the terminal device as the auxiliary test model. As another example, the information for indicating the auxiliary test model indicates that the test device uses a model provided by the network device as the auxiliary test model. As another example, the information for indicating the auxiliary test model indicates that the test device uses a predefined model as the auxiliary test model. For another example, the information for indicating the auxiliary test model indicates that the test device uses a model provided by the terminal device as the auxiliary test model. As another example, the information for indicating the auxiliary test model indicates that the test device uses a model provided by the network device as the auxiliary test model. As another example, the information for indicating the auxiliary test model indicates that the test device uses the reference model as the auxiliary test model.

Taking the first information including information for indicating the first model as an example, in some implementations, the information for indicating the first model may include indication information (e.g., a model ID) of the first model. In other implementations, the information for indicating the first model may include a model type of the first model.

Taking the scenario of the network device and the terminal device as an example, for example, the information for indicating the first model may indicate that the model to be tested is generated by the terminal device. For another example, the information indicating the first model may indicate that the model to be tested is generated by the network device. For another example, the information indicating the first model may indicate that the model to be tested is transmitted by the network device. For another example, the information indicating the first model may indicate that the model to be tested is a reference model defined by a protocol. For another example, the information indicating the first model may indicate that the model to be tested is generated by the terminal device. For another example, the information for indicating the first model may indicate that the first model is transmitted by the terminal device. For another example, the information indicating the first model may indicate that the model to be tested is generated by the network device. For another example, the information indicating the first model may indicate that the model to be tested is a predefined model.

In the embodiments of the present application, the device to be tested may indicate the first condition information to the test device to support the test device in determining the auxiliary test model according to the first condition information. In addition, the device to be tested may indicate the auxiliary test model that needs to be matched to the test device to support the test device in determining the auxiliary test model. In yet another aspect, the device to be tested may indicate the model to be tested to the test device to support the test device in determining an auxiliary test model for the model to be tested.

In some implementations, if the target device is a test device, the method further includes an operation that the test device transmits second information to the device to be tested (see operation S610). In the embodiments of the present application, the transmission of the second information may be used in combination with the selection of the auxiliary test model described above, and at this time, operation S610 may be performed after operation S310.

In some implementations, the second information includes one or more of: information for indicating an acquisition manner of the first model; information for indicating an auxiliary test model; or information for indicating the first model.

Taking the second information including information for indicating an acquisition manner of the first model, the acquisition manner of the first model may include that the first model is provided by a device that trains the first model; and/or the first model is provided by a device for deploying the first model.

Taking the second information including information for indicating the auxiliary test model as an example, in some implementations, the information for indicating the auxiliary test model may include indication information (e.g., a model ID) of the auxiliary test model. In other implementations, the information for indicating the auxiliary test model may include a model type of the auxiliary test model.

Taking the scenario of the network device and the terminal device as an example, for example, the information for indicating the auxiliary test model may indicate that the test device uses a model provided by the terminal device as the auxiliary test model. As another example, the information for indicating the auxiliary test model indicates that the test device uses a model provided by the network device as the auxiliary test model. As another example, the information for indicating the auxiliary test model indicates that the test device uses a predefined model as the auxiliary test model. For another example, the information for indicating the auxiliary test model indicates that the test device uses a model provided by the terminal device as the auxiliary test model. As another example, the information for indicating the auxiliary test model indicates that the test device uses a model provided by the network device as the auxiliary test model. As another example, the information for indicating the auxiliary test model indicates that the test device uses a reference model as the auxiliary test model.

Taking the second information including information for indicating the first model as an example, in some implementations, the information for indicating the first model may include indication information (e.g., a model ID) of the first model. In other implementations, the information for indicating the first model may include a model type of the first model.

Taking the scenario of the network device and the terminal device as an example, for example, the information for indicating the first model may indicate that the model to be tested is generated by the terminal device. For another example, the information for indicating the first model may indicate that the model to be tested is generated by the network device. For another example, the information for indicating the first model may indicate that the model to be tested is transmitted by the network device. For another example, the information for indicating the first model may indicate that the model to be tested is a reference model defined by a protocol. For another example, the information for indicating the first model may indicate that the model to be tested is generated by the terminal device. For another example, the information for indicating the first model may indicate that the first model is transmitted by the terminal device. For another example, the information for indicating the first model may indicate that the model to be tested is generated by the network device. For another example, the information for indicating the first model may indicate that the model to be tested is a predefined model.

As described above, the providing device of the model may be the training device of the model, or the providing device of the model may be a deployment device of the model. Accordingly, in some scenarios, the training device for training the model and the deployment device for deploying the model may be different devices. The model may be one or more models described above. For example, the training device may be a network device, accordingly, the deployment device may be a terminal device. For another example, the training device may be a terminal device, and accordingly, the deployment device may be a network device. For another example, the training device may be a first terminal device, and accordingly, the deployment device may be a second terminal device. For another example, the training device may be a first network device, and accordingly, the deployment device may be a second network device.

In other scenarios, the training device for training the model and the deployment device for deploying the model may be the same device, herein the model may be one or more of the models described above. For example, both the training device and the deployment device may be a network device. For another example, both the training device and the deployment device may be a terminal device.

In the embodiments of the present application, devices for deploying the first model and the peer model of the first model are not limited. For example, the first model may be deployed in a network device, and correspondingly, the peer model of the first model may be deployed in a terminal device. For another example, the peer model of the first model may be deployed in a network device, and accordingly, the first model may be deployed in a terminal device. For another example, the peer model of the first model may be deployed in the first terminal device, and accordingly, the first model may be deployed in the second terminal device. For another example, the peer model of the first model may be deployed in the first network device, and accordingly, the first model may be deployed in the second network device.

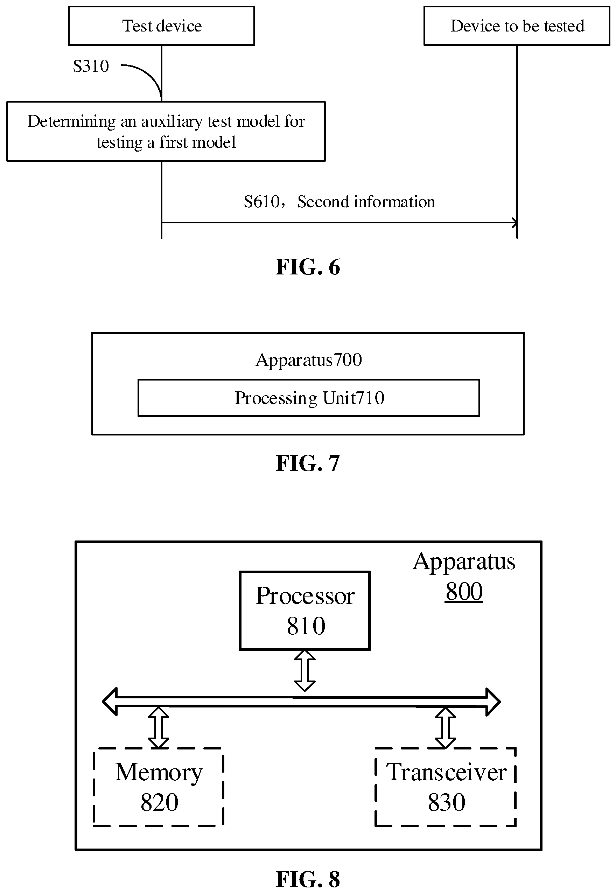

The method embodiments of the present application are described in detail above with reference to FIGS. 1 to 6, and device embodiments of the present application will be described in detail below with reference to FIGS. 7 to 8. It should be understood that the description of the method embodiments and the description of the device embodiments correspond to each other, and therefore, the portions not described in detail can be referred to the foregoing method embodiments.

FIG. 7 is an apparatus for model testing according to an embodiment of the present application, and the apparatus 700 shown in FIG. 7 includes a processing unit 710.

The processing unit 710 is configured to determine an auxiliary test model for testing a first model. The auxiliary test model is determined based on a first condition. The first condition is associated with one or more of: a training manner for the first model; an acquisition manner of the first model; a training method for a peer model of the first model; A acquisition manner of the peer model of the first model; whether the first model is available; whether the peer model of the first model is available; whether the first model is successfully deployed; whether the peer model of the first model is successfully deployed; whether a reference model is successfully deployed; whether a peer model of the reference model is successfully deployed; or whether a test device supports the peer model of the first model.

In some implementations, when the first condition is associated with the training manner, a target model associated with the training manner includes at least one of the first model or the peer model of the first model, and the training manner includes one or more of joint training, single side training or sequential training.

In some implementations, when the first condition is associated with the acquisition manner, a target model associated with the acquisition manner includes the first model and/or the peer model of the first model, and the acquisition manner includes that: the target model is transmitted by a providing device of the target model to a device for deploying the target model; or the target model is trained by the device for deploying the target model.

In some implementations, when the acquisition manner includes that the target model is trained by the device for deploying the target model, training data for the target model is acquired from the providing device of the target model, and the providing device is configured to train the first model and the peer model of the first model.

In some implementations, when the first condition is associated with whether the first model is successfully deployed, whether the first model is successfully deployed is associated with one or more of the following: whether the first model is successfully transmitted; whether the first model is successfully indicated; whether training data for the first model is successfully transmitted; or whether the training data for the first model is successfully indicated; and/or
when the first condition is associated with whether the peer model of the first model is successfully deployed, whether the peer model of the first model is successfully deployed is associated with one or more of the following: whether the peer model of the first model is successfully transmitted; whether the peer model of the first model is successfully indicated; whether training data for the peer model of the first model is successfully transmitted; or whether the training data for the peer model of the first model is successfully indicated; and/or

When the first condition is associated with whether the reference model is successfully deployed, whether the reference model is successfully deployed is associated with one or more of the following: whether the reference model is successfully transmitted; whether the reference model is successfully indicated; whether training data for the reference model is successfully transmitted; or whether the training data for the reference model is successfully indicated; and/or

When the first condition is associated with whether the peer model of the reference model is successfully deployed, whether the peer model of the reference model is successfully deployed is associated with one or more of the following: whether the peer model of the reference model is successfully transmitted; whether the peer model of the reference model is successfully indicated; whether training data for the peer model of the reference model is successfully transmitted; or whether the training data for the peer model of the reference model is successfully indicated.

In some implementations, when the first condition includes that the first model and the peer model of the first model are trained by a first device, and the peer model of the first model is deployed by the first device for a second device, the auxiliary test model is the peer model of the first model; or
when the first condition includes that the first model and the peer model of the first model are trained by a first device and the first model is deployed by the first device for a second device, the auxiliary test model is the peer model of the first model.

In some implementations, the peer model of the first model is indicated by the first device to a test device for the first model, or the peer model of the first model is transmitted by the first device to the test device for the first model.

In some implementations, when the first condition includes that the first model and the reference model are trained by a first device, the reference model is deployable by the first device for a second device, and the reference model has not been deployed in the second device, the auxiliary test model is the reference model;
when the first condition includes that the first model and the reference model are trained by a first device, and the first model is deployable by the first device for a second device, and the second device does not deploy the first model, the auxiliary test model is the reference model.

In some implementations, the reference model is indicated by the first device to the test device for the first model, or the reference model is transmitted by the first device to the test device for the first model.

In some implementations, when the first condition is associated with whether the test device for the first model supports the peer model of the first model, and the first condition includes that the test device does not support the peer model of the first model, the auxiliary test model is a predefined model associated with a testing of the first model.

In some implementations, when the first condition includes that a second model and a peer model of the second model is trained by a first device and the second model is not deployed to a second device, a model to be tested is the first model deployed in the second device, and the auxiliary test model is a predefined model associated with a testing of the first model.

In some implementations, the target device is a test device, or the target device is a device for deploying the first model.

In some implementations, when the target device is the test device, the apparatus further includes a first receiving unit. The first receiving unit is configured to receive first information transmitted by the device for deploying the first model, and the first information includes one or more of the following: information for determining the first condition; information for indicating the auxiliary test model; or information for indicating the first model.

In some implementations, if the target device is the test device, the apparatus further includes a first transmission unit. The transmission unit is configured to transmit second information to the device for deploying the first model, and the second information includes one or more of: information for indicating the acquisition manner of the first model; information of the auxiliary test model; or information for indicating the first model.

In some implementations, when the target device is a device for deploying the first model, the apparatus further includes a second transmission unit. The second transmission unit is configured to transmit first information to the test device, the first information includes one or more of: information for determining the first condition; information for indicating the auxiliary test model; or information for indicating the first model.

In some implementations, when the target device is a device in which the first model is deployed, the apparatus further includes a second receiving unit. The second receiving unit is configured to receive second information transmitted by the test device, and the second information includes information used to indicate one or more of the following: the acquisition manner of the first model; information of the auxiliary test model; information for indicating the first model.

In an alternative embodiment, the processing unit 710 may be a processor 810. The apparatus 700 for model testing may also include a transceiver 830 and a memory 820, as specifically shown in FIG. 8.

FIG. 8 is a schematic structural diagram of an apparatus according to an embodiment of the present application. The dashed line in FIG. 8 indicates that the unit or module is optional. The apparatus 800 may be used to implement the method described in the method embodiments described above. The apparatus 800 may be a chip, a terminal device, or a network device.

The apparatus 800 may include one or more processors 810. The processors 810 may support the apparatus 800 to implement the methods described in the above method embodiments. The processor 810 may be a general-purpose processor or a special-purpose processor. For example, the processor may be a central processing unit (CPU). Alternatively, the processor may also be another general purpose processor, a digital signal processor (DSP), an application specific integrated circuit (ASIC), an field programmable gate array (FPGA) or other programmable logic device, a discrete gate or transistor logic device, a discrete hardware component, or the like. The general purpose processor may be a microprocessor or the processor may be any conventional processor or the like.

The apparatus 800 may also include one or more memories 820. The memory 820 has stored a program that can be executed by the processor 810 to cause the processor 810 to perform the method described in the previous method embodiments. The memory 820 may be independent of the processor 810 or may be integrated in the processor 810.

The apparatus 800 may also include a transceiver 830. The processor 810 may communicate with other devices or chips through the transceiver 830. For example, the processor 810 may transmit or receive data with other devices or chips through the transceiver 830.

An embodiment of the present application further provides a computer-readable storage medium for storing a program. The computer-readable storage medium can be applied to a terminal device or a network device provided by an embodiment of the present application, and the program causes a computer to execute a method executed by the terminal device or the network device in the embodiments of the present application.

An embodiment of the present application also provides a computer program product. The computer program product includes a program. The computer program product can be applied to a terminal device or a network device provided by the embodiments of the present application, and the program causes a computer to execute a method executed by the terminal device or the network device in the embodiments of the present application.

An embodiment of the present application also provides a computer program. The computer program can be applied to a terminal device or a network device provided by the embodiments of the present application, and the computer program causes a computer to execute a method executed by the terminal or the network device in the embodiments of the present application.

It is to be understood that the terms "system" and "network" may be used interchangeably in this application. In addition, the terminology used in the present application is for explanation of specific embodiments of the present application only, and is not intended to limit the present application. The terms "first," "second," "third," and "fourth," etc. in the specification and claims of the present application and the accompanying drawings are used to distinguish different objects, and are not used to describe a specific order. Furthermore, the terms "comprising" and "having" and any variations thereof are intended to cover non-exclusive inclusions.

In the embodiments of the present application, the "indication" mentioned may be a direct indication, an indirect indication, or an associated relationship. For example, A indicates B, which may mean that A directly indicates B, for example, B can be acquired by A; or which may mean that A indicates B indirectly, for example, A indicates C, and B can be obtained through C; or which may mean that there is an association relationship between A and B.

In the embodiments of the present application, "B corresponding to A" means that B is associated with A, and B can be determined from A. However, it should also be understood that determining B from A does not mean that B is determined from A alone, and that B may also be determined from A and/or other information.

In the embodiments of the present application, the term "correspondence" may indicate that there is a direct correspondence or indirect correspondence relationship between two items, or may indicate that there is a correlation relationship between the two items, or may indicate a relationship between indicating and being instructed, configuring and being configured, or the like.

In the embodiments of the present application, "predefined" or "preconfigured" may be realized by storing corresponding codes, tables, or other methods that can be used to indicate relevant information in a device (including, for example, a terminal device and a network device) in advance, and the present application does not limit the specific implementation method thereof. For example, predefined may refer to defined in the protocol.

In the embodiments of the present application, the "protocol" may refer to a standard protocol in the communication field, and may include, for example, an LTE protocol, an NR protocol, and related protocols applied to future communication systems, and the present application is not limited thereto.

The term "and/or" in the embodiments of the present application is only an association relationship describing an association object, and indicates that there may be three kinds of relationships, for example, A and/or B, which may indicate that A exists alone, both A and B exist, and B exists alone. In addition, the character "/" herein generally indicates that the related objects before and after the character "/" are in an "or" relationship.

In various embodiments of the present application, the size of the sequence number of the above-described processes does not mean the sequence of execution, and the sequence of execution of various processes should be determined by its function and internal logic, and should not constitute any limitation on the implementation process of the embodiments of the present application.

In several embodiments provided herein, it should be understood that the disclosed systems, apparatuses, and methods may be implemented in other ways. For example, the device embodiments described above are merely schematic. For example, the division of units is only one logical function division, and there may be other division methods in actual implementation. For example, multiple units or components may be combined or integrated into another system, or some features may be ignored or not implemented. In addition, the coupling or direct coupling or communication connection between items shown or discussed may be an indirect coupling or communication connection through some interfaces, devices or units, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiments.

In addition, each functional unit in each embodiment of the present application may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that incorporates one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above are merely specific embodiments of the present application, but the protection scope of the present application is not limited thereto, and changes or alternatives which can be obtained easily by any person skilled in the art within the technical scope disclosed in the present application should be covered within the protection scope of the present application. Therefore, the protection scope of the present application should be based on the protection scope of the claims.

## Claims

1. A method for model testing, comprising:
determining, by a target device, an auxiliary test model for testing a first model, the auxiliary test model being determined based on a first condition, the first condition being associated with one or more of:
a training manner for the first model;
an acquisition manner of the first model;
a training manner for a peer model of the first model;
an acquisition manner of the peer model of the first model;
whether the first model is available;
whether the peer model of the first model is available;
whether the first model is successfully deployed;
whether the peer model of the first model is successfully deployed;
whether a reference model is successfully deployed;
whether a peer model of the reference model is successfully deployed; or
whether a test device supports the peer model of the first model.

2. The method of claim 1, wherein when the first condition is associated with the training manner, a target model associated with the training manner comprises at least one of the first model or the peer model of the first model, and the training manner comprises one or more of joint training, single side training or sequential training.

3. The method of claim 1 or 2, wherein when the first condition is associated with the acquisition manner, a target model associated with the acquisition manner comprises at least one of the first model or the peer model of the first model, and the acquisition manner comprises that:
the target model is transmitted by a providing device of the target model to a device for deploying the target model; or
the target model is trained by the device for deploying the target model.

4. The method of claim 3, wherein when the acquisition manner comprises that the target model is trained by the device for deploying the target model, training data for the target model is acquired from the providing device of the target model, and the providing device is configured to train the first model and the peer model of the first model.

5. The method of any one of claims 1-4, wherein at least one of the following applies:
when the first condition is associated with whether the first model is successfully deployed, whether the first model is successfully deployed is associated with one or more of the following: whether the first model is successfully transmitted; whether the first model is successfully indicated; whether training data for the first model is successfully transmitted; or whether the training data for the first model is successfully indicated;
when the first condition is associated with whether the peer model of the first model is successfully deployed, whether the peer model of the first model is successfully deployed is associated with one or more of the following: whether the peer model of the first model is successfully transmitted; whether the peer model of the first model is successfully indicated; whether training data for the peer model of the first model is successfully transmitted; or whether the training data for the peer model of the first model is successfully indicated;
when the first condition is associated with whether the reference model is successfully deployed, whether the reference model is successfully deployed is associated with one or more of the following: whether the reference model is successfully transmitted; whether the reference model is successfully indicated; whether training data for the reference model is successfully transmitted; or whether the training data for the reference model is successfully indicated; or
when the first condition is associated with whether the peer model of the reference model is successfully deployed, whether the peer model of the reference model is successfully deployed is associated with one or more of the following: whether the peer model of the reference model is successfully transmitted; whether the peer model of the reference model is successfully indicated; whether training data for the peer model of the reference model is successfully transmitted; or whether the training data for the peer model of the reference model is successfully indicated.

6. The method of any one of claims 1-5, wherein
when the first condition comprises that the first model and the peer model of the first model are trained by a first device, and the peer model of the first model is deployed by the first device for a second device, the auxiliary test model is the peer model of the first model; or
when the first condition comprises that the first model and the peer model of the first model are trained by a first device and the first model is deployed by the first device for a second device, the auxiliary test model is the peer model of the first model.

7. The method of claim 6, wherein the peer model of the first model is indicated by the first device to a test device for the first model, or the peer model of the first model is transmitted by the first device to the test device for the first model.

8. The method of any one of claims 1-5, wherein
when the first condition comprises that the first model and the reference model are trained by a first device, the reference model is deployable by the first device for a second device, and the reference model has not been deployed in the second device, the auxiliary test model is the reference model;
when the first condition comprises that the first model and the reference model are trained by a first device, and the first model is deployable by the first device for a second device, and the first model has not been deployed in the second device, the auxiliary test model is the reference model.

9. The method of claim 8, wherein the reference model is indicated by the first device to the test device for the first model, or the reference model is transmitted by the first device to the test device for the first model.

10. The method of any one of claims 1-5, wherein when the first condition is associated with whether the test device for the first model supports the peer model of the first model, and the first condition comprises that the test device does not support the peer model of the first model, the auxiliary test model is a predefined model associated with a testing of the first model.

11. The method of any one of claims 1-5, wherein when the first condition comprises that a second model and a peer model of the second model are trained by a first device and the second model is not deployed to a second device, a model to be tested is the first model deployed in the second device, and the auxiliary test model is a predefined model associated with a testing of the first model.

12. The method of any one of claims 1-11, wherein the target device is a test device, or the target device is a device for deploying the first model.

13. The method of claim 12, wherein when the target device is the test device, the method further comprises:
receiving, by the test device, first information transmitted by the device for deploying the first model, the first information comprising one or more of:
information for determining the first condition;
information for indicating the auxiliary test model; or
information for indicating the first model.

14. The method of claim 12, wherein when the target device is the test device, the method further comprises:
transmitting, by the test device, second information to the device for deploying the first model, the second information comprising information used to indicate one or more of:
the acquisition manner of the first model;
information of the auxiliary test model; or
information for indicating the first model.

15. The method of claim 12, wherein when the target device is the device for deploying the first model, the method further comprises:
transmitting, by the target device, first information to the test device, the first information comprising one or more of:
information for determining the first condition;
information for indicating the auxiliary test model; or
information for indicating the first model.

16. The method of claim 12, wherein when the target device is the device for deploying the first model, the method further comprises:
receiving, by the target device, second information transmitted by the test device, the second information comprising information used to indicate one or more of:
the acquisition manner of the first model;
information of the auxiliary test model; or
information for indicating the first model.

17. An apparatus for model testing, comprising:
a processing unit, configured to determine an auxiliary test model for testing a first model, the auxiliary test model being determined based on a first condition, the first condition being associated with one or more of:
a training manner for the first model;
an acquisition manner of the first model;
a training manner for a peer model of the first model;
an acquisition manner of the peer model of the first model;
whether the first model is available;
whether the peer model of the first model is available;
whether the first model is successfully deployed;
whether the peer model of the first model is successfully deployed;
whether a reference model is successfully deployed;
whether a peer model of the reference model is successfully deployed; or
whether a test device supports the peer model of the first model.

18. The apparatus of claim 17, wherein when the first condition is associated with the training manner, a target model associated with the training manner comprises at least one of the first model or the peer model of the first model, and the training manner comprises one or more of joint training, single side training or sequential training.

19. The apparatus of claim 17 or 18, wherein when the first condition is associated with the acquisition manner, a target model associated with the acquisition manner comprises at least one of the first model or the peer model of the first model, and the acquisition manner comprises that:
the target model is transmitted by a providing device of the target model to a device for deploying the target model; or
the target model is trained by the device for deploying the target model.

20. The apparatus of claim 19, wherein when the acquisition manner comprises that the target model is trained by the device for deploying the target model, training data for the target model is acquired from the providing device of the target model, and the providing device is configured to train the first model and the peer model of the first model.

21. The apparatus of any one of claims 17-20, wherein at least one of the following applies:
when the first condition is associated with whether the first model is successfully deployed, whether the first model is successfully deployed is associated with one or more of the following: whether the first model is successfully transmitted; whether the first model is successfully indicated; whether training data for the first model is successfully transmitted; or whether the training data for the first model is successfully indicated;
when the first condition is associated with whether the peer model of the first model is successfully deployed, whether the peer model of the first model is successfully deployed is associated with one or more of the following: whether the peer model of the first model is successfully transmitted; whether the peer model of the first model is successfully indicated; whether training data for the peer model of the first model is successfully transmitted; or whether the training data for the peer model of the first model is successfully indicated;
when the first condition is associated with whether the reference model is successfully deployed, whether the reference model is successfully deployed is associated with one or more of the following: whether the reference model is successfully transmitted; whether the reference model is successfully indicated; whether training data for the reference model is successfully transmitted; or whether the training data for the reference model is successfully indicated; or
when the first condition is associated with whether the peer model of the reference model is successfully deployed, whether the peer model of the reference model is successfully deployed is associated with one or more of the following: whether the peer model of the reference model is successfully transmitted; whether the peer model of the reference model is successfully indicated; whether training data for the peer model of the reference model is successfully transmitted; or whether the training data for the peer model of the reference model is successfully indicated.

22. The apparatus of any one of claims 17-21, wherein
when the first condition comprises that the first model and the peer model of the first model are trained by a first device, and the peer model of the first model is deployed by the first device for a second device, the auxiliary test model is the peer model of the first model; or
when the first condition comprises that the first model and the peer model of the first model are trained by a first device and the first model is deployed by the first device for a second device, the auxiliary test model is the peer model of the first model.

23. The apparatus of claim 22, wherein the peer model of the first model is indicated by the first device to a test device for the first model, or the peer model of the first model is transmitted by the first device to the test device for the first model.

24. The apparatus of any one of claims 17-21, wherein
when the first condition comprises that the first model and the reference model are trained by a first device, the reference model is deployable by the first device for a second device, and the reference model has not been deployed in the second device, the auxiliary test model is the reference model;
when the first condition comprises that the first model and the reference model are trained by a first device, and the first model is deployable by the first device for a second device, and the first model has not been deployed in the second device, the auxiliary test model is the reference model.

25. The apparatus of claim 24, wherein the reference model is indicated by the first device to the test device for the first model, or the reference model is transmitted by the first device to the test device for the first model.

26. The apparatus of any one of claims 17-21, wherein when the first condition is associated with whether the test device for the first model supports the peer model of the first model, and the first condition comprises that the test device does not support the peer model of the first model, the auxiliary test model is a predefined model associated with a testing of the first model.

27. The apparatus of any one of claims 17-21, wherein when the first condition comprises that a second model and a peer model of the second model are trained by a first device and the second model is not deployed to a second device, a model to be tested is the first model deployed in the second device, and the auxiliary test model is a predefined model associated with a testing of the first model.

28. The apparatus of any one of claims 17-27, wherein the target device is a test device, or the target device is a device for deploying the first model.

29. The apparatus of claim 28, wherein when the target device is the test device, the apparatus further comprises:
a first receiving unit, configured to receive first information transmitted by the device for deploying the first model, the first information comprising one or more of:
information for determining the first condition;
information for indicating the auxiliary test model; or
information for indicating the first model.

30. The apparatus of claim 28, wherein when the target apparatus is the test device, the apparatus further comprises:
a first transmission unit, configured to transmit second information to the device for deploying the first model, the second information comprising one or more of:
information for indicating the acquisition manner of the first model;
information of the auxiliary test model; or
information for indicating the first model.

31. The apparatus of claim 28, wherein when the target device is the device for deploying the first model, the apparatus further comprises:
a second transmission unit, configured to transmit first information to the test device, the first information comprising one or more of:
information for determining the first condition;
information for indicating the auxiliary test model; or
information for indicating the first model.

32. The apparatus of claim 28, wherein when the target device is the device for deploying the first model, the apparatus further comprises:
a second receiving unit, configured to receive second information transmitted by the test device, the second information comprising one or more of:
information for indicating the acquisition manner of the first model;
information of the auxiliary test model; or
information for indicating the first model.

33. An apparatus for model testing, comprising:
a transceiver;
a memory for storing a program; and
a processor configured to call the program in the memory and control the transceiver to receive or transmit signals to cause a terminal device to perform the method of any one of claims 1 to 16.

34. An apparatus comprising a processor configured to call a program from a memory to cause the apparatus to perform the method of any one of claims 1-16.

35. A chip comprising a processor configured to call a program from a memory such that a device on which the chip is mounted performs the method of any one of claims 1-16.

36. A computer-readable storage medium having stored thereon a program that causes a computer to perform the method of any one of claims 1-16.

37. A computer program product comprising a program that causes a computer to perform the method of any one of claims 1-16.

38. A computer program that causes a computer to perform the method of any one of claims 1-16.
